# EUROPEAN PATENT APPLICATION

(11) **EP 3 748 817 A1**
(43) Date of publication of application: **09.12.2020**
(21) Application number: 20177154.0
(22) Date of filing: 28.05.2020
(51) Int. Cl.: H02K 1/18, H02K 1/27

(54) **PERMANENT MAGNET MODULE FOR A PERMANENT MAGNET MACHINE**

(30) Priority: 06.06.2019 EP 19178761
(71) Applicant: Siemens Gamesa Renewable Energy A/S, 7330 Brande (DK)
(72) Inventor: Azar, Ziad, Sheffield South Yorkshire S10 4ED (GB); Clark, Richard, Worrall Sheffield S35 0AF (GB); Duke, Alexander, Sheffield S10 5SN (GB); Thougaard, Hans-Joergen, 8600 Silkeborg (DK); Urda, Adriana Cristina, 2300 Copenhagen (DK)
(74) Representative: Aspacher, Karl-Georg

(57) **Abstract**

The present invention describes a permanent magnet module (101) for a permanent magnet machine (10). The permanent magnet module (101) comprises at least a permanent magnet (200) and a baseplate (301) attached to the at least one permanent magnet (200), the baseplate (301) providing an interface for attaching the permanent magnet module (101) to a permanent magnet machine (10), wherein the baseplate (301) is glued to the at least one permanent magnet (200), a layer of glue (350) being provided between the at least one permanent magnet (200) and a contact side (120) of the baseplate (301), the contact side (120) being provided with at least one groove (361, 362, 363).

## Description

### Field of invention

The present invention relates to the field of improving the integrity and ease manufacturing of magnet modules for permanent magnet electrical machine. Particularly, the present invention relates to a permanent magnet module including a support, to which a magnet for a permanent magnet machine is attached.

### Art Background

An electric machine, such as an electric generator installed in a wind turbine, typically comprises a rotor which rotates relative to a stator around a rotational axis. Stator and rotor are separated from each other by an airgap, circumferentially extended around the rotational axis.

In a permanent-magnet electric machine the rotor comprises a plurality of permanent magnets modules, each module including a baseplate and one or more permanent magnets attached to the baseplate. The baseplate is attached to the rotor body, so that, in operation, the baseplate is interposed between the respective magnet and the rotor body. In each magnet module a cover is typically provided over the permanent magnet(s) to encapsulate the permanent magnet(s). The cover (made of stainless steel or another non-magnetic material or magnetic material) may be welded or fixed by other means to the respective baseplate. The stator typically includes a body having stator radial slots longitudinally extending along an axial direction of the stator and an electric circuit comprising a plurality of copper windings housed in the slots.

The magnets are typically fixed to baseplates using glue; if the glue coverage area is too small the connection strength in the magnet module becomes mechanically weak. On the other hand if the glue surface is too big, then the glue will run outside and contaminate the welding between base plate and cover, in this case the welding may be compromised.

It is desirable to provide a permanent magnet module, which overcome the above identified inconveniences regarding the gluing of the magnets to the baseplates.

### Summary of the Invention

This objective may be solved by the permanent magnet module according to the independent claim. Advantageous embodiments of the present invention are described by the dependent claims.

According to the present invention a permanent magnet module for a permanent magnet machine is provided. The permanent magnet module comprises at least a permanent magnet and a baseplate attached to the at least one permanent magnet. The baseplate provides an interface for attaching the permanent magnet module to a permanent magnet machine. The baseplate is glued to the at least one permanent magnet. A layer of glue is provided between the at least one permanent magnet and a contact side of the baseplate. The contact side is provided with at least one groove.

According to possible embodiments of the invention, the permanent magnet machine may be an electrical generator. Particularly, but not exclusively, the electrical generator may be used in a wind turbine.

According to the different embodiments of the present invention, the at least one groove may be axially or tangentially oriented with respect to a rotational axis of the permanent magnet machine

The one or more grooves prevent glue from running outside and contaminate other components. For example, contamination with glue of the welding between the cover and the baseplate is prevented. Advantageously, the grooves in the baseplates improve the connection strength between magnets and baseplate, increase the production efficiency and reduce the cost of magnet modules. Another advantage is determined by lower losses in the baseplate due to the cuts in the circuit of the eddy current loops, so that higher generator efficiency is achieved.

According to embodiments of the present invention, a permanent magnet module comprises a cover for at least partially covering the permanent magnet, the cover being attached to the baseplate. According to an embodiment of the present invention, the cover and the baseplate may comprise a stainless steel.

Advantageously, being the electrical conductivity of stainless steel lower than that of carbon steel, the losses in the baseplate are reduced considerably. The term "carbon steel" is used in reference to steel which is not stainless steel, in this use "carbon steel" may include alloy steels. Ferritic stainless steel does not have a significant impact the reluctance of the magnetic circuit as it has a high permeability and therefore still provides a low reluctant path to the magnetic flux. The stainless steel does not corrode in the environment of the inside of a wind turbine, therefore no coating or painting is needed. The welding process between two parts (cover and first portion of the base plate) of the same material is easier to control and permits to achieve a high-quality weld. Therefore, a reduction in the occurrence of welding problems between the baseplate and magnet cover are expected. The second portion of the baseplate may also include stainless steel.

According to embodiments of the present invention, the baseplate includes at least a first portion and a second portion, the first portion providing the interface for attaching the permanent magnet module to a permanent magnet machine and the second portion including the contact side. Glue may be also provided between the first portion and the second portion of the baseplate.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
Fig. 1 shows a schematic section of a wind turbine including embodiments of the present invention.
Fig. 2 shows a cross-sectional view of a permanent magnet machine including a plurality of permanent magnet modules according to the present invention.
Fig. 3 shows a frontal circumferential view of a permanent magnet module according to a first exemplary embodiment of the present invention.
Fig. 4 shows a frontal circumferential view of a permanent magnet module according to a second exemplary embodiment of the present invention.
Fig. 5 shows a top view of the baseplate of the permanent magnet module of Fig. 3.
Fig. 6 shows a top view of a first alternative embodiment of the baseplate of the permanent magnet module of Fig. 3.
Fig. 7 shows a top view of a second alternative embodiment of the baseplate of the permanent magnet module of Fig. 3.

### Detailed Description

The illustrations in the drawings are schematically. It is noted that in different figures, similar or identical elements are provided with the same reference signs.

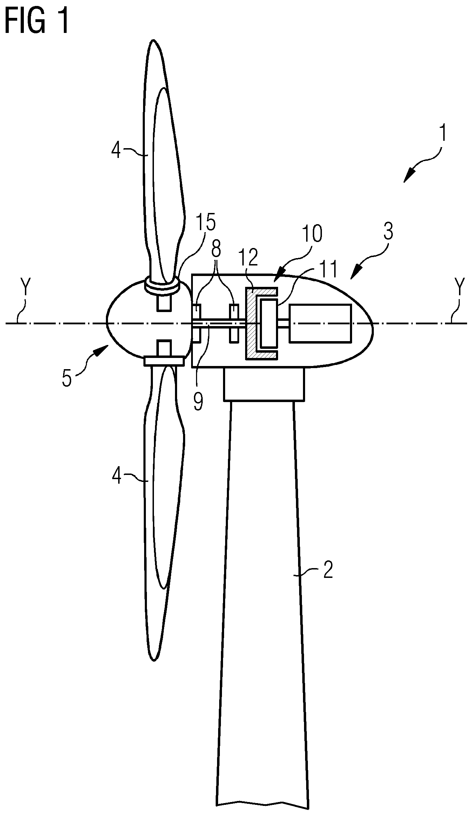

**Figure 1** shows a partial cross-sectional view of a wind turbine 1 including a permanent magnet machine 10, i.e. an electrical generator, which includes a permanent magnet module according to the invention. The permanent magnet machine 10 includes a stator 11 and a rotor 12. The rotor 12 is rotatable with respect to the stator 11 about a longitudinal axis of the permanent magnet machine 10. The terms axial, radial and circumferential in the following are to be intended with reference to the longitudinal axis Y of rotation of the permanent magnet machine 10. In the embodiment of Figure 1, the rotor 12 is radially external with respect the stator 11 and rotatable about the longitudinal axis Y. A circumferential air gap is provided between the stator 11 and the rotor 12. According to other possible embodiments of the present invention (not represented in the attached figures), the rotor 12 is radially internal with respect the stator 11 and rotatable about the longitudinal axis Y. The permanent magnet machine 10 may be a fractional slot concentrated winding electrical generator.

According to other possible embodiments of the present invention (not represented in the attached figures), the present invention may be applied to any type of permanent magnet electric machines, e.g. radial, axial, etc. The present invention may be applied also to integral-slot electric permanent magnet machine.

A plurality of permanent magnets modules (not visible in Figure 1) is attached to the rotor 12 by means of respective baseplates, as detailed in the following. According to other possible embodiments of the present invention (not represented in the attached figures), a plurality of permanent magnets modules may be attached to the stator of a permanent magnet machine.

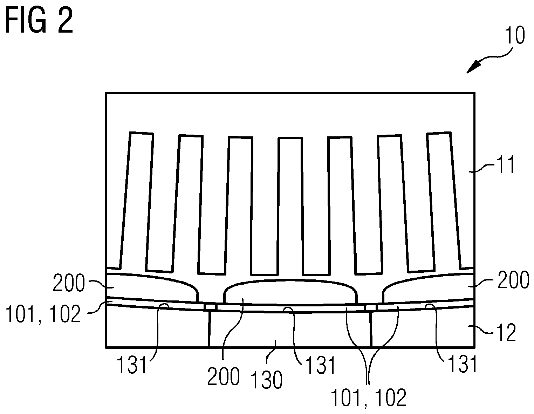

**Figure 2** shows a partial cross-sectional view of the permanent magnet machine 10 including a plurality of permanent magnet modules 101 attached to the rotor 12. The permanent magnet modules 101 are attached to a side of the rotor 12 which faces the stator 11. Each permanent magnet module 101 comprises a permanent magnet 200 and a baseplate 301. According to other embodiment of the present invention (not shown), each permanent magnet module 101 may comprise more than one permanent magnet 200 and more than one baseplate 301. Each of the permanent magnets 200 is attached to a rotor body 130 of the rotor 12 by means of the respective base plate 301. Each base plate 301 of each permanent magnet module 101 is connected to a respective recess 131 provided in the rotor body 130.

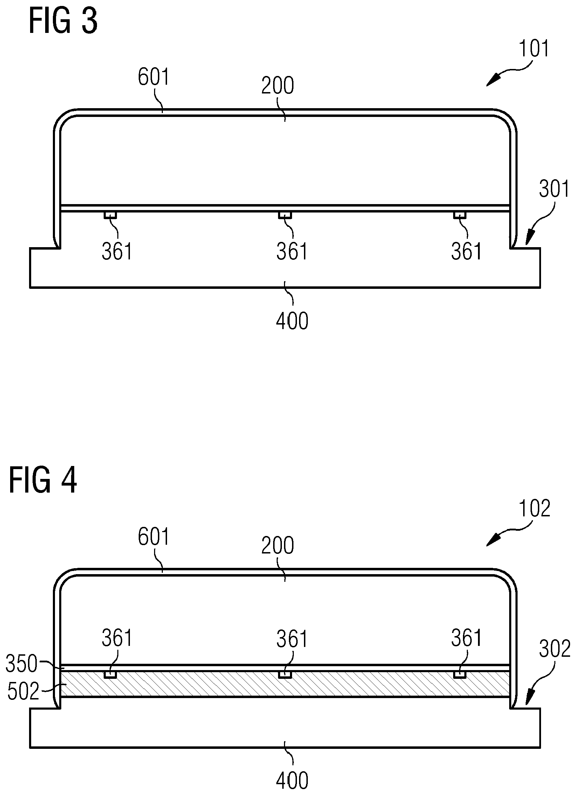

**Figure 3** shows a tangential sectional view of a permanent magnet module 101 including a permanent magnet 200 and a respective baseplate 301 attached to the permanent magnet 200. According to other embodiments of the present invention (not shown) the permanent magnet module 101 includes a plurality of permanent magnets 200. The baseplate 301 includes an interface for attaching the permanent magnet module 101 to the respective recess 131 in the rotor body. The baseplate 301 further includes a contact side 120, opposite to interface for attaching the permanent magnet module 101 to the respective recess 131. A layer of glue 350 is provided between the permanent magnet 200 and the contact side 120. The contact side 120 of the second portion of the baseplate 301 is provided with at least one groove (three axially oriented grooves 361 in the embodiment of figures 3, 4 and 5). The length and width of the grooves 361 may range between 1 mm and 1 mm less than the length or width of the baseplate. A clearance between the grooves 361 and the baseplate edges is required to assure no glue in the welding joint. The depths of the grooves may range between 0,1 mm to almost the depths of the baseplate. The permanent magnet module 101 includes a cover 601 covering the permanent magnet 200 and welded to the baseplate 301. The cover 601 and the baseplate 301 may be both made of stainless steel.

**Figure 4** shows a tangential sectional view of a permanent magnet module 102 including a permanent magnet 200 and a respective baseplate 302 attached to the permanent magnet 200. The baseplate 302 includes a first portion 400 providing the interface for attaching the permanent magnet module 101 to the respective recess 131 in the rotor body. The baseplate 302 further includes a second portion 502 including the contact side 120. The second portion 502 is attached to the first portion 400 on another side, which is opposite to the contact side 120 and the three axially oriented grooves 361. The second portion 502 and/or the first portion 400 may comprise a soft magnetic composite material (SMC). Alternatively, according to another embodiment of the present invention, the second portion 502 and/or the first portion 400 of the baseplate 302 comprises high Silicon steel, having a composition including between 2% to 4% of Silicon. For example, the second portion 502 and/or the first portion 400 may comprise 60Si2Mn steel or an equivalent steel. According to another embodiment of the present invention, the first portion 400 of the baseplate 302 may be attached to the cover 601. The first portion 400 and the cover 601 may be both made of stainless steel. According to another embodiment of the present invention (not shown), the baseplate may include more than two portions.

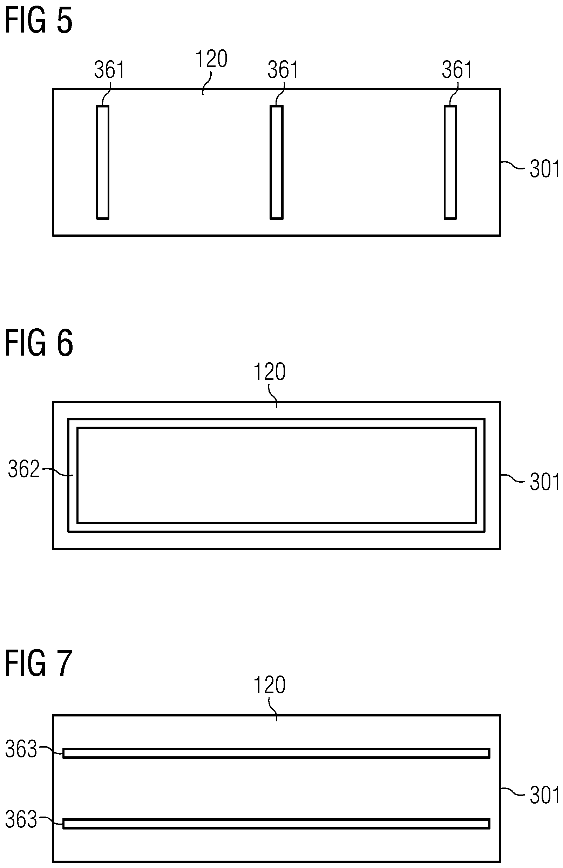

**Figure 5** shows a top view of the baseplate 301. The baseplate 301 may comprise a soft magnetic composite material (SMC). Alternatively, according to another embodiment of the present invention, the baseplate 301 comprises high Silicon steel, having a composition including between 2% to 4% of Silicon. For example, the baseplate 301 may comprise 60Si2Mn steel or another equivalent steel.

Alternatively, according to the embodiment of **Figure 6****,** one perimetral groove 362 is provided having two tangentially oriented sides and two axially oriented sides.

According to the embodiment of **Figure 7****,** two tangentially oriented grooves 363 are provided.

The length and width of the grooves 362, 363 may range between 1 mm and 1 mm less than the length or width of the baseplate. A clearance between the grooves 362, 363 and the baseplate edges is required to assure no glue in the welding joint. The depths of the grooves may range between 0,1 mm to almost the depths of the baseplate.

## Claims

1. Permanent magnet module (101) for a permanent magnet machine (10), the permanent magnet module (101) comprising at least a permanent magnet (200) and a baseplate (301) attached to the at least one permanent magnet (200), the baseplate (301) providing an interface for attaching the permanent magnet module (101) to a permanent magnet machine (10), wherein the baseplate (301) is glued to the at least one permanent magnet (200), a layer of glue (350) being provided between the at least one permanent magnet (200) and a contact side (120) of the baseplate (301), the contact side (120) being provided with at least one groove (361, 362, 363).

2. Permanent magnet module (101) according to claim 1, wherein the at least one groove (361) is axially oriented with respect to a rotational axis (Y) of the permanent magnet machine (10).

3. Permanent magnet module (101) according to claim 1, wherein the at least one groove (363) is tangentially oriented with respect to a rotational axis (Y) of the permanent magnet machine (10).

4. Permanent magnet module (101) a according to any of the claims 1 to 3, wherein the baseplate (301) comprises a soft magnetic composite material.

5. Permanent magnet module (101) according to any of the claims 1 to 3, wherein the baseplate (301) comprises high Silicon steel, having a composition including between 2% to 4% of Silicon.

6. Permanent magnet module (101) according to claim 5, wherein the baseplate (301) comprises 60Si2Mn or equivalent steel.

7. Permanent magnet module (101) according to any of the previous claims, comprising a cover (601) for at least partially covering the permanent magnet (200), the cover (601) being attached to the baseplate (301).

8. Permanent magnet module (101) according to claim 7, wherein the cover (601) and the baseplate (301) comprise a stainless steel.

9. Permanent magnet module (102) according to any of the previous claims, wherein the baseplate (302) includes at least a first portion (400) and a second portion (502), the first portion (400) providing the interface for attaching the permanent magnet module (102) to a permanent magnet machine (10) and the second portion (502) including the contact side (120) .

10. Permanent magnet machine (10) including a plurality of permanent magnet modules (101) according to any of the previous claims.

11. Wind turbine (1) comprising an electrical generator (10) according to claim 10.
